(19) Europäisches Patentamt
European Patent Office
Office européen des brevets

(11) EP 4 032 963 A1

(12) EUROPEAN PATENT APPLICATION

(43) Date of publication:
**27.07.2022 Bulletin 2022/30**

(21) Application number: **21152705.6**

(22) Date of filing: **21.01.2021**

(51) International Patent Classification (IPC):
***C10G 1/06*** *(2006.01)* ***C10G 1/08*** *(2006.01)*
***C10G 1/10*** *(2006.01)*

(52) Cooperative Patent Classification (CPC):
**C10G 1/10; C10G 1/06; C10G 1/086**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Basell Poliolefine Italia S.r.l.**
**20121 Milano (IT)**

(72) Inventors:
- **MIHAN, Shahram**
**65812 Bad Soden (DE)**
- **FRAAIJE, Volker**
**60385 Frankfurt (DE)**

(74) Representative: **LyondellBasell**
**c/o Basell Polyolefine GmbH**
**Industriepark Hoechst, Bldg. E413**
**65926 Frankfurt am Main (DE)**

# (54) PROCESS FOR HYDRODEPOLYMERIZATION OF POLYMERIC WASTE MATERIAL

(57) The present disclosure refers to a process for the hydrodepolymerization of organic waste material employing a hydrocracking catalyst comprising a hydrogenating component which comprises at least one of Fe, Mo, W, Ti, Ni, Cr, V, Co, Zr and mixtures thereof supported on an inorganic carrier and comprising a depolymerization component which is an acidic compound, and a process for the production of olefins using the product of the hydrodepolymerization process as feedstock.

EP 4 032 963 A1

**Description**

FIELD OF THE DISCLOSURE

The present disclosure refers to a process for the hydrodepolymerization of organic waste material in the presence a hydrocracking catalyst comprising at least one of Fe, Mo, W, Ti, Ni, Cr, V, Co, Zr and mixtures thereof supported on a carrier selected from the group consisting of $SiO_2$, $Al_2O_3$, $AlPO_4$ and Al/Si mixed oxide and a process for the production of olefins using the product of the hydrodepolymerization process as feedstock.

BACKGROUND OF THE DISCLOSURE

Polymeric products such as plastics are widely used in human life, and waste plastics materials have caused serious pollution issues. Feedstock recycling is one way of managing waste plastics materials and the pyrolysis to convert plastic waste into chemical intermediates is becoming more and more the focus of current research. Although well-established, direct pyrolysis of the waste plastics material in inert atmosphere conditions could be improved with regard to the usual batch production, yield, quality of the obtained product and degree of carbonization.

W.M. Lewandowski et al in their article "Efficiency and proportions of waste tyre pyrolysis products depending on the reactor type - A review", published in Journal of Analytical and Applied Pyrolysis, 140 (2019), 25-53, discuss the current use of different pyrolytic reactors, their constructions and operating principles regarding the yields of main products of waste tire pyrolytic recycling and provide a summary of current techniques.

In order to further optimize the process of polymeric waste material management, in particular with regard to plastic waste, efforts have been made to improve the process of depolymerization commonly employed with regard to yield and energy efficiency.

WO 2012/076890 A1 relates to a continuous process for the recycling of plastics materials, in particular waste plastics materials, into chemical feedstock and hydrocarbon fractions. The described process for recycling a waste plastics material includes the steps of (i) continuously introducing into a reactor a waste plastics material as a feedstock, wherein the reactor comprises at least one reaction chamber, (ii) optionally introducing the feedstock and hydrogen gas into a dechlorination reaction chamber and maintaining the dechlorination reaction chamber at an elevated temperature $T^1$ and at a pressure $P^1$; recovering, where present, HCl from the dechlorination reaction chamber; and separately recovering dechlorinated feedstock from the dechlorination reaction chamber; (iii) introducing the feedstock from step (i), or when the process involves step (ii), the dechlorinated feedstock from step (ii), and hydrogen into a hydrogenation reaction chamber and maintaining the hydrogenation reaction chamber at an elevated temperature $T^2$ and at a pressure $P^2$ and contacting the feedstock with a catalyst; and (iv) recovering hydrogenated feedstock from the hydrogenation reaction chamber; (v) optionally reintroducing non-hydrogenated or partially hydrogenated feedstock from the hydrogenation reaction chamber into the hydrogenation reaction chamber. The catalyst employed in the claimed process may be a zeolite catalyst comprising zeolite having a sodium oxide content of 0.1% or less and optionally comprising a transition metal.

WO 2010/139997 A2 describes a method for making a modified zeolite catalyst to be used in the recycling of waste plastics materials, the method comprising (i) obtaining commercially available zeolite Y catalyst having a $Na_2O$ content of from 2.0 to 4.0%; (ii) optionally subjecting the zeolite to an ion-exchange process, wherein the ion-exchange process comprises admixing the zeolite with an ammonium salt solution at between 50 to 85°C for between 10 and 60 minutes; (iii) subjecting the zeolite of step (i) or step (ii) to an ion-exchange process, wherein the ion-exchange process comprises admixing the zeolite with an ammonium salt solution at between 60 and 100°C for between 60 and 240 minutes; (iv) steam calcinating the zeolite from step (iii) at between 450 and 800°C for between 10 and 60 minutes; (v) subjecting the zeolite of step (iv) to an ion-exchange process, wherein the ion-exchange process comprises admixing the zeolite of step (iv) with an ammonium salt solution at between 50 and 95°C for between 10 and 120 minutes, and (vi) optionally subjecting the zeolite of step (v) to an ion-exchange process comprising admixing the zeolite of step (v) with a transition metal salt solution. The catalyst may be employed in the recycling of waste plastics materials such as polyethylene, polypropylene, polystyrene, polyethylene terephthalate, polychloropropene, nylon, polyvinyl chloride, polyacrylonitrile and polyurethane.

US 2018/0201847 A1 is concerned with the provision of a process to upgrade problematic feeds to produce transportation fuels. The process focuses on the upgradation of heavy crude oil/residue using waste plastic as hydrogen donating agent. For upgrading the heavy crude oil and residues, the heavy crude oil and residues are mixed with waste plastic and taken into a reaction vessel, the mixture is preheated at a temperature range of 130-220°C and then further heated for hydrogenation reactions at a temperature in the range of 350-450°C with stirring in the presence of hydrogen in a reactor and the desired products are separated.

US 4,941,966 describes a process for the hydrogenative conversion of mixtures of oil and organic waste products, comprising the steps of (i) preparing a hydrogenation mixture comprising a heavy oil, residual oil or mixtures

thereof, or a used oil, a waste oil or mixtures thereof, and one or more organic waste products containing natural or synthetic organic compounds comprising uncrosslinked or crosslinked carbon chains; (ii) contacting said hydrogenation mixture with an additive selected from the group consisting of high surface area solids containing carbon, red mud, iron oxides, electrostatic filter dusts and cyclone dusts, wherein said additive comprises particles in two different particle size ranges, and (iii) hydrogenating said contacted mixture at a hydrogen partial pressure of 50 to 350 bar.

US 6,171,475 B1 refers to a method for converting a polymer or oligomer derived from an ethylenically unsaturated monomer into alkanes or into a hydrocarbon fraction or a lower oligomer fraction by controlled hydrogenation, wherein the polymer or oligomer is exposed to a catalyst based on a metal hydride or an organometallic complex supported on a mineral carrier, the complex having at least one hydrocarbon ligand and optionally at least one hydride ligand, and the resulting mixture is reacted with hydrogen to cause catalytic hydrogenation of the polymer or oligomer.

WO 2013/169462 A1 describes a hydrocarbon upgrading process comprising the steps of (a) treating a hydrocarbon feed in at least one of a steam cracker, catalytic cracker, coker, hydrocracker, and reformer under suitable conditions to produce a first stream comprising olefinic and aromatic hydrocarbons; (b) recovering from said first stream a second stream composed mainly of $C_4$ to $C_{12}$ olefinic and aromatic hydrocarbons; (c) contacting at least part of the second stream with a catalyst in the absence of added hydrogen under reaction conditions including a temperature of 450 to 700°C effective to dealkylate, transalkylate, crack and aromatize components of said second stream to produce a third stream having increased benzene and/or toluene content compared with the second stream and a $C_3$-olefin by-product; (d) recovering $C_3$-olefins from the third stream; and (e) separating a forth stream comprising toluene from the third stream. The catalyst employed in the upgrading process comprises zeolite Y.

WO 2018/055555 A1 relates to the production of hydrocarbon streams from mixed plastics via processes which include pyrolysis, hydroprocessing, hydrodealkylation and steam cracking, wherein monomeric aromatics in the $C_6$-$C_8$ range and light gas olefins are preferred products. The process includes the use of a catalyst which may be a zeolite comprising one or more metals, the zeolite preferably comprising ZSM-5, ZSM-11, Y, high-silica Y, USY or combinations thereof.

US 2018/0002609 A1 discloses a method of reduction of chlorine in pyrolysis products derived from a mixed plastic stream, the method comprising: (a) causing pyrolysis of a plastic feedstock to produce a first stream comprising $C_1$-$C_4$ gaseous hydrocarbons and light gas olefins and a second stream comprising hydrocarbons having 5 or more carbon atoms, wherein at least a portion of the plastic feedstock comprises chlorinated plastic; (b) feeding the second stream and hydrogen gas into a hydrocracker to produce a third stream comprising gaseous $C_1$-$C_4$ hydrocarbon gases and a fourth stream comprising hydrocarbons having 5 or more carbon atoms; and (c) feeding the fourth stream to either (i) a steam cracker to produce a fifth stream comprising $C_1$-$C_4$ gaseous hydrocarbons and light gas olefins, a sixth stream comprising $C_5$-$C_8$ hydrocarbons and a seventh stream comprising hydrocarbons having 8 or more carbon atoms; or (ii) a fluidized catalytic cracker to produce an eighth stream comprising $C_1$-$C_4$ gases and light gas olefins, and a ninth stream comprising hydrocarbons having 5 or more carbon atoms.

Although there has been some improvement in the process of polymeric waste material recycling, there is still the desire for an efficient process which allows the recycling of a number of different polymeric waste feedstocks and which yields in particular a product stream with a high liquid content and a low content of aromatic and olefinic components which can be used directly as feedstock for a steam cracker and in particular for the production of olefins.

It is therefore a need to provide a process of hydrodepolymerization which yields a product which can be directly fed into a steam cracker for further processing such as for the production of olefins. It was surprisingly found that said need can be met by carrying out a process in the presence of a catalyst which comprises an active species supported on an inorganic oxide.

## SUMMARY OF THE DISCLOSURE

In general, the present disclosure provides a process for the hydrodepolymerization of organic waste material, the process comprising the steps of:

i) providing a feedstock of organic waste material;

ii) mixing the feedstock of organic waste material with a hydrocracking catalyst comprising a hydrogenating component which comprises at least one of Fe, Mo, W, Ti, Ni, Cr, V, Co, Zr and mixtures thereof supported on an inorganic carrier and comprising a depolymerization component which is an acidic compound, preferably selected from the group of $Al_2O_3$, aluminosilicates, silica and zeolites, in particular from the group of Zeolite Y, Zeolite Beta, Zeolite A, Zeolite X, Zeolite L and mixtures thereof, especially Zeolite Y and Zeolite Beta;

iii) depolymerizing the mixture in the presence of hydrogen in a reactor;

iv) separating the content of the reactor to obtain a liquid or liquefiable hydrodepolymerization product;

v) optionally, re-introducing hydrocracking catalyst and/or hydrogen enriched gas fractions obtained in separation step iv) into the reactor; and

vi) optionally, collecting gaseous fractions obtained in separation step iv).

In some embodiments, the inorganic carrier of the hydrogenating component is the depolymerization component.

In some embodiments, the hydrocracking catalyst is used in combination with a depolymerization catalyst and the depolymerization catalyst is an acidic compound, preferably selected from the group of $Al_2O_3$, aluminosilicates, silica and zeolites, in particular from the group of Zeolite Y, Zeolite Beta, Zeolite A, Zeolite X, Zeolite L and mixtures thereof, especially Zeolite Y and Zeolite Beta.

In some embodiments, the hydrodepolymerization is carried out at an initial hydrogen pressure from 20 to 500 bar, preferably from 30 to 400 bar, in particular from 100 to 350 bar and/or the hydrodepolymerization is carried out at a temperature from 200 to 600°C, preferably from 270 to 550°C, in particular from 300 to 450°C.

In some embodiments, the organic waste material is a polymeric waste material which consists of or comprises a plastic material selected from the group comprising or consisting of polyethylene (PE), polypropylene (PP), polystyrene (PS), polyethylene terephthalate (PET), polyvinylchloride (PVC), polyamide (PA), polyurethane (PU), polyacrylonitrile (PAN) and polybutylene (PB) and mixtures thereof.

In some embodiments, the organic waste material has a total content of volatiles and the total content of volatiles in the organic waste material measured as weight loss at 100°C and a pressure of 200 mbar over a period of 2 hours is less than 10 wt.%, preferably less than 5 wt.%, more preferably less than 2 wt.%, especially less than 1 wt.%, based on the total weight of the organic waste material.

In some embodiments, the organic waste material is a shredded polymeric waste material having a bulk density from 50 to 500 g/l, preferably from 75 to 400 g/l or the polymeric waste material is in pellet form and has a bulk density from 300 to 700 g/l, the bulk density being determined according to DIN 53466.

In some embodiments, the organic waste has a polyolefin content, in particular a content of polypropylene (PP) and/or of polyethylene (PE), and the polyolefin content is more than 50 wt.%, preferably more than 60 wt.%, more preferably more than 70 wt.%, especially more than 80 wt.% and in particular more than 90 wt.%, based on the total weight of the organic waste material feedstock.

In some embodiments, the organic waste material has a total chlorine content and the total chlorine content of the organic waste material is less than 1.0 wt.%, preferably less than 0.5 wt.%, based on the total weight of the organic waste material.

In some embodiments, the obtained hydrodepolymerization product has a content of olefinic compounds, expressed as bromine number of less than 20, preferably less than 15, and in particular no more than 10, based on the total weight of the hydrodepolymerization product and/or the $^1$H-NMR spectrum of the obtained hydrodepolymerization product shows less than 10 mol%, preferably less than 5 mol%, and in particular no more than 3 mol% of aromatic protons.

In some embodiments, the hydrocracking catalyst is obtained by a process comprising the steps of

a) providing a precursor compound for at least one of Fe, Mo, W, Ti, Ni, Cr, V, Co, Zr and mixtures thereof, the precursor compound being in the form of the respective salt;

b) dissolving the precursor compound in a polar solvent;

c) providing an inorganic carrier;

d) depositing the dissolved precursor compound on the carrier by incipient wetness impregnation to obtain a hydrocracking catalyst precursor;

e) drying the hydrocracking catalyst precursor obtained in step d);

f) treating the dried hydrocracking catalyst precursor at elevated temperatures; and

g) cooling the product of step f) to obtain the hydrocracking catalyst.

A further aspect of the present disclosure is the use of a hydrodepolymerization product obtained by the process of the present disclosure as feedstock for a steam cracker.

A further aspect of the present disclosure is the use of a hydrocracking catalyst comprising a hydrogenating component which comprises at least one of Fe, Mo, W, Ti, Ni, Cr, V, Co, Zr and mixtures thereof supported on an inorganic carrier and comprising a depolymerization component which is an acidic compound for hydrodepolymerization of organic waste material.

In some embodiments, the hydrocracking catalyst is used in combination with a depolymerization catalyst, wherein the depolymerization catalyst is an acidic compound, preferably selected from the group of $Al_2O_3$, aluminosilicates , silica and zeolites, in particular from the group of Zeolite Y, Zeolite Beta, Zeolite A, Zeolite X, Zeolite L and mixtures thereof, especially Zeolite Y and Zeolite Beta.

Another aspect of the present disclosure is a process for the production of olefins, the process comprising

i) providing a feedstock of organic waste material;

ii) mixing the feedstock of organic waste material with a hydrocracking catalyst comprising a hydrogenating component which comprises at least one of Fe, Mo, W, Ti, Ni, Cr, V, Co, Zr and mixtures thereof supported on an inorganic carrier and comprising a depolymerization component which is an acidic compound;

iii) introducing the mixture into a reactor and treating the mixture with hydrogen;

iv) separating the content of the reactor to obtain a liquid or liquefiable hydrodepolymerization product;

v) optionally collecting gaseous fractions obtained in separation step iv); and

vi) introducing the hydrodepolymerization product into a steam cracker to form a product comprising olefins.

DETAILED DESCRIPTION OF THE DISCLOSURE

In a first embodiment of the present disclosure, a process for the hydrodepolymerization of organic waste material is provided, the process comprising the steps of

i) providing a feedstock of organic waste material;

ii) mixing the feedstock of organic waste material with a hydrocracking catalyst comprising a hydrogenating component which comprises at least one of Fe, Mo, W, Ti, Ni, Cr, V, Co, Zr and mixtures thereof supported on an inorganic carrier and comprising a depolymerization component which is an acidic compound, preferably selected from the group of $Al_2O_3$, aluminosilicates, silica and zeolites, in particular from the group of Zeolite Y, Zeolite Beta, Zeolite A, Zeolite X, Zeolite L and mixtures thereof, especially Zeolite Y and Zeolite Beta;

iii) depolymerizing the mixture in the presence of hydrogen;

iv) optionally collecting the gaseous reaction products;

v) separating the content of the reactor to obtain the desired hydrodepolymerization product;

vi) optionally, re-introducing the hydrocracking catalyst and/or reactor gases into the reactor.

It was surprisingly found that carrying out a hydrodepolymerization in the presence of the specific hydrocracking catalyst of the present disclosure allows the hydrodepolymerization to be conducted at lower temperatures and lower hydrogen pressure than previously described in the literature.

The hydrodepolymerization process of the present disclosure is characterized by a low generation of gaseous reaction products, by a low content of aromatic and olefinic compounds in the obtained hydrodepolymerization product and by a low generation of char in the reactor for carrying out the hydrodepolymerization process. In addition, side reactions to polyaromatic hydrocarbons (e.g. asphaltene), dioxins and char are significantly suppressed. Therefore, the obtained hydrodepolymerization product can be directly fed into a steam cracker for further processing without the need for further purification or pre-treatment, making the process of the present disclosure highly time and energy efficient.

Organic Waste Material Feedstock

Common hydrodepolymerization processes are often limited to specific waste materials which in most cases

have to be pre-treated before being introduced into the recycling process. The hydrodepolymerization process of the present disclosure on the other hand was found to be suitable for recycling a variety of organic waste materials such as plastic waste materials and cracker oil residue. The organic waste material feedstock employed in the process of the present disclosure may include essentially all polymeric materials, in particular those materials formed from synthetic polymers. Non-limiting examples include polyolefins, such as polyethylene, polypropylene, etc., polystyrene, polyethylene terephthalate (PET), polyvinyl chloride (PVC), polyamide, polycarbonate, polyurethane, polyester, natural and synthetic rubber, tires, filled polymers, composites and plastic alloys, plastics dissolved in a solvent, etc. During development of the process of the present disclosure for plastic waste materials, it was surprisingly found that other hydrocarbon materials may also be used as organic waste material feedstock. These hydrocarbons may include biomass, bio oils, petroleum oils, etc. Thus, while the present description is directed primarily to the hydrodepolymerization of plastics feedstocks, it should be understood that the process of the present disclosure has applicability to and encompasses the use of other hydrocarbons as well. When production of light gas olefins is desired, a plastics feedstock that consists primarily, or contains a substantial portion of, polyolefins may be preferred. Mixtures of various different plastics and hydrocarbon materials may be used without limitation.

The organic waste material feedstock of the present disclosure may be composed of one type of organic waste material or may be a mixture of two or more different organic waste materials. The organic waste material feedstock may be provided in a variety of different forms. In smaller scale operations, the organic waste material feedstock may be in the form of a powder. In larger scale operations, the organic waste material feedstock may be in the form of pellets, such as those having a particle size from 1 to 20 mm, preferably from 2 to 10 mm, and more preferably from 2 to 8 mm, or in form of shredded flakes and/or small pieces of film, preferably having a particle size from 1 to 20 mm. In the context of the present disclosure, having a particles size in a defined range means that 90 wt.% of the particles have a diameter which is in the defined range. The particle size may be determined by sieving or by using a Beckman Coulters LS13320 laser diffraction particle size analyzer. The organic waste material feedstock may further be provided as a liquid feedstock predominantly comprising liquid organic waste materials such as pyrolysis oil, ethylene cracker residue (ECR), vacuum gas oil (VGO), or heavy vacuum gas oil (HVGO).

The organic waste material which forms the organic waste material feedstock preferably comprises a polymeric waste material. The amount of polymeric waste material in the organic waste material which forms the organic waste material feedstock is preferably from 50 to 99 wt.%, more preferably from 60 to 97 wt.%, most preferably from 70 to 95 wt.%, and in particular from 75to 97 wt.%.

A polymeric waste material mostly consists of plastics material and is generally named after the type of polymer which forms the predominant component of the polymeric waste material. Preferably, an polymeric waste material employed as feedstock in the process of the present disclosure contains more than 25 wt.% of its total weight of the polymeric material, preferably more than 40 wt.% and more preferably more than 50 wt.%. Other components in the polymeric waste material are for example additives, such as fillers, reinforcing materials, processing aids, plasticizers, pigments, light stabilizers, lubricants, impact modifiers, antistatic agents, inks, antioxidants, etc.

The polymeric waste materials used in the process of the present disclosure preferably comprise polyolefins and polystyrene, such as high-density polyethylene (HDPE), low-density polyethylene (LDPE), ethylene-propylene-diene monomer (EPDM), polypropylene (PP), and polystyrene (PS). Particular preferred are polymeric waste materials comprising a mixture of polyolefins and polystyrene.

Other polymeric waste materials, such as polyvinyl chloride, polyvinylidene chloride, polyethylene terephthalate, polyurethane (PU), acrylonitrile-butadiene-styrene (ABS), nylon and fluorinated polymers can also be employed in the process of the present disclosure. If present in the polymeric waste material, those polymers are preferably present in an amount of less than 50 wt.%, preferably less than 30 wt.%, more preferably less than 20 wt.%, and even more preferably less than 10 wt.% of the total weight of the dry weight polymeric waste material feedstock.

Preferably, the polymeric waste material comprises one or more thermoplastic polymers and is essentially free of thermosetting polymers. Essentially free in this regard is intended to denote a content of thermosetting polymers of less than 15 wt.%, preferably less than 10 wt.% and even more preferably less than 5 wt.% of the polymeric waste material feedstock.

The polymeric waste materials used in the process of the present disclosure are preferably selected from the group consisting of single plastic waste, single virgin plastic on spec or off spec, mixed plastics waste, rubber waste, cracker oil residue, used oils, biomass or a mixture thereof. Single plastic waste, single virgin plastic off spec, mixed plastics waste, rubber waste or a mixture thereof are preferred. Single virgin plastic off-spec, mixed plastics waste or a mixture thereof are particularly preferred.

It was surprisingly found that the process of the present disclosure also leads to good results even if limited quantities of non-pyrolysable components such as water, glass, stone, metal and the like are present as contaminant of the organic waste material. "Limited quantities" preferably mean an amount of less than 50 wt.%, preferably less than 20 wt.%, and more preferably less than 10 wt.% of the total weight of the dry organic waste material feedstock.

The organic waste material can optionally be extruded prior to being employed as feedstock in the process of

the present disclosure. In preferred embodiments, the organic waste material is pelletized and the pellets are employed as feedstock in the process of the present disclosure. In other preferred embodiments, the organic waste material is fed into the reactor in a molten state, for example at temperatures from 200°C to 300°C.

The organic waste material employed as feedstock in the process of the present disclosure is preferably further characterized by at least one of the following features:

i) The total content of volatiles (TV) measured as weight loss at 100°C and a pressure of 200 mbar over a period of 2 hours is less than 10 wt.%, preferably less than 5 wt.%, and more preferably less than 2 wt.%, especially less than 1 wt.%, based on the total weight of the organic waste material feedstock;

ii) The organic waste material is a shredded and optionally compacted polymeric waste material having a bulk density from 50 to 500 g/l, preferably from 75 to 400 g/l or the polymeric waste material is in pellet form and has a bulk density from 300 to 700 g/l, the bulk density being determined according to DIN 53466;

iii) The polyolefin content, in particular the content of polypropylene (PP) and/or polyethylene (PE) in the organic waste material is more than 50 wt.%, preferably more than 60 wt.%, and more preferably more than 70 wt.%, especially more than 80 wt.% and in particular more than 90 wt.%, based on the total weight of the organic waste material feedstock;

iv) The amount of polar polymer contaminants in the organic waste material is less than 10 wt.%, preferably less than 5 wt.%, and more preferably less than 3%, based on the total weight of the organic waste material;

v) The amount of cellulose, wood and/or paper in the organic waste material is less than 10 wt.%, preferably less than 5 wt.%, and more preferably less than 3%, based on the total weight of the organic waste material;

vi) The total chlorine content is less than 1.0 wt.%, preferably less than 0.5 wt.%, more preferably less than 0.1 wt.%, based on the total weight of the organic waste material; and

vii) The total ash content of the organic waste material feedstock is less than 10 wt.%, preferably less than 5 wt.%, more preferably less than 2 wt.%, and most preferably less than 1 wt.%, determined as residue after heating the polymeric waste at 800°C for 120 hours in air. In other preferred embodiments, the ash content is from 0.01 to 2 wt.%, preferred from 0.02 to 1.5 wt.%, and more preferred from 0.05 to 1.0 wt.%.

In preferred embodiments of the present disclosure, the organic waste materials employed as feedstock in the process of the present disclosure are defined by upper limits of minor components, constituents or impurities expressed as percent by weight. The lower limits for the amounts of these components, constituents or impurities in the preferred organic waste materials are preferably below the detection limit, or the lower limits are 0.001 wt.% or 0.01 wt.%. or 0.1 wt.%, respectively.

A variety of techniques are known to separate materials in a polymeric waste stream. Moving beds, drums and screens, and air separators are used to differentiate materials by size, weight and density. Advanced sorting of plastic waste by spectroscopy techniques (MIR, NIR [near-infrared]), X-Ray or fluorescence spectroscopy deliver high quality plastic waste streams with high polyolefin content.

Automatic Separation Techniques of waste plastics comprise dry sorting technique, electrostatic sorting technique, mechanical sorting method (involves centrifugal force, specific gravity, elasticity, particle shape, selective shredding and mechanical properties) as well as wet sorting technique (e.g. sink float sorting method) and chemical sorting methods.

A suitable feedstock to be employed in the process of the present disclosure may be obtained by applying any of the known sorting techniques, as e.g. summarized in B. Ruj et al: Sorting of plastic waste for effective recycling, Int. J. Appl. Sci. Eng. Res 4, 2015, 564-571.

Hydrocracking Catalyst

The process is carried out in the presence of a hydrocracking catalyst comprising a hydrogenating component which comprises an active species selected from the group consisting of Fe, Mo, W, Ti, Ni, Cr, V, Co, Zr and mixtures thereof supported on a carrier. Although this type of catalyst is known for its activity in polymerization reaction, it was surprisingly found that this type of catalyst can also successfully be employed in hydrodepolymerization reaction, yielding a hydrodepolymerization product with low aromatic and olefinic content which can be directly employed as feedstock for steam cracking.

The carrier for supporting at least one of Fe, Mo, W, Ti, Ni, Cr, V, Co, Zr and mixtures thereof can be any inorganic carrier. The carrier is preferably selected from the group consisting of $SiO_2$, $Al_2O_3$, $AlPO_4$ and Al/Si mixed oxide. The Al/Si mixed oxide, which is particularly preferred in the present disclosure, refers to a material comprising a mixture of $Al_2O_3$ and $SiO_2$, having a neutral structure.

The hydrocracking catalyst of the present disclosure further comprises a depolymerization component which is an acidic compound which is preferably selected from the group consisting of $Al_2O_3$, aluminosilicates, silica and zeolites. Zeolites as referred to in the present disclosure are understood to be crystalline microporous aluminosilicates which are built up from corner-sharing $SiO_4^-$ and $AlO_4$- tetrahedrons having the general structure $M_n$+x/n $[AlO_2]^-$x $(SiO_2)y]^+$ $zH_2O$ with n being the charge of the cation M, typically an alkaline or alkaline earth metal or hydrogen ion, preferably an ion selected from the group consisting of $H^+$, $Na^+$, $Ca^{2+}$, $K^+$ and $Mg^{2+}$, and z defining the number of water molecules incorporated into the crystal structure. Zeolites differ from mixed Al/Si oxides by their defined pore structure and ionic character. Zeolites are well-established catalysts, in particular with Fluid Catalytic Cracking (FCC) and Hydro-Cracking (HC). In particularly preferred embodiments, the zeolite employed as depolymerization component is selected from the group consisting of Zeolite Y, Zeolite Beta, Zeolite A, Zeolite X, Zeolite L and mixtures thereof, especially Zeolite Y and Zeolite Beta. The listed zeolites are well-known and commercially available. Particularly preferred are zeolites wherein the metal ion M is substituted by a hydrogen. Other specific examples for suitable zeolite-type components to be employed in the present disclosure include but are not limited to ZSM-5, ZSM-11, ZSM-22, ZSM-23, ZSM-35, ZSM-48, ZSM-50, TS-1, TS-2, SSZ-46, MCM-22, MCM-49, FU-9, PSH-3, ITQ-1, EU-1, NU-10, silicalite-1, silicalite-2, boralite-C, boralite-D, BCA, and mixtures thereof. Alternatively, or additionally, the depolymerization component may comprise an amorphous-type compound which may comprise for example silica, alumina, kaolin, clay, or any mixture thereof. Silica, in particular, in the form of sand, is well known for FCC catalyst applications.

In preferred embodiments of the present disclosure, the inorganic carrier of the hydrogenating component of the hydrocracking catalyst is the depolymerization component of the hydrocracking catalyst. In these embodiments, the at least one of Fe, Mo, W, Ti, Ni, Cr, V, Co, Zr and mixtures are supported on the depolymerization component which acts as carrier.

In particular preferred embodiments, the carrier is an Al/Si mixed oxide. The composition of the Al/Si mixed oxide employed as carrier may be adjusted according to need. However, especially favorable results of the hydrodepolymerization are achieved in cases where the carrier contains $Al_2O_3$ and $SiO_2$ in specific amounts. Therefore, in preferred embodiments, the carrier contains $Al_2O_3$ in an amount from 20 to 99 wt.%, preferably from 30 to 80 wt.%, and especially from 40 to 70 wt.%, based on the total weight of the carrier. Further, the carrier preferably contains $SiO_2$ in an amount from 1 to 80 wt.%, preferably from 20 to 70 wt.%, and especially from 30 to 60 wt.%, based on the total weight of the carrier.

It was surprisingly found that the results of the hydrodepolymerization process can even be further improved if the carrier contains a slight excess of $Al_2O_3$. Therefore, in preferred embodiments, the carrier comprises an excess of $Al_2O_3$. Further preferred are embodiments in which the weight ratio of $Al_2O_3$ to $SiO_2$ in the carrier is from 99:1 to 30:70, preferably from 9:1 to 3:2, and in particular 4 from:1 to 3:2.

The determination of the $SiO_2$ and $Al_2O_3$ content of the carrier can be carried out by atomic emission spectroscopy using an inductively coupled plasma (ICP-AES).

It was surprisingly found that the common drawbacks usually observed when using granular supports can be avoided if the average particle size of the carrier is kept within a certain range. Thus, embodiments are preferred in which the average particle size D50 of the carrier is from 5 to 300 μm, preferably from 5 to 100 μm, and more preferably from 10 to 80 μm, in particular from 10 to 50 μm and especially from 15 to 40 μm. Alternatively, the carrier may have a particle size D50 of from 20 to 50 μm. The volume-median diameter D50 refers to the portion of the particles with diameters smaller or larger than this value being 50% and may be determined according to Coulter counter analysis in accordance with ASTM D4438. In particular preferred embodiment at least 5% by volume of the particles of the carrier have a particle size in the range of from 0.1 to 3 μm and/or at least 40% by volume of the particles of the carrier have a particle size from 0.1 to 12 μm and/or at least 75% by volume of the particles of the carrier have a particle size in the range from 0.1 to 35 μm, the % by volume being based on the total volume of the particles.

In further preferred embodiments, a carrier with an average pore size of from 1 to 100 nm, preferably from 2 to 80 nm, and more preferably from 5 to 60 nm, determined by BET method, is used.

Pore size as used in the present disclosure generally refers to the distance between two opposite walls of a pore, i.e. the diameter of the pore in case of cylindrical pores and the width of the pore in case of slip-shaped pores, respectively.

The method of BET is well known to the person skilled in the art and was described in S. Brunauer et al., Journal of the American Chemical Society, 60, p. 209-319, 1929.

The carrier preferably has a pore volume of from 0.2 to 4 ml/g, preferably from 0,5 to 3 ml/g, and in particular from 0.6 to 2 ml/g, determined by BET.

In further preferred embodiments, the carrier has a water content from 0.2 to 10%, preferably from 0.3 to 5%, based on the total content of the carrier and determined by Karl-Fischer titration.

The activity of any solid catalyst may be strongly influenced by its surface area. In the present disclosure, the carrier preferably has a specific surface from 5 to 800 $m^2$/g, more preferably from 100 to 600 $m^2$/g, especially from 150 to 500 $m^2$/g, and in particular from 100 to 400 $m^2$/g, determined according to the BET method.

The hydrocracking catalyst employed in the process of the present disclosure comprises the active species preferably in an amount from 0.5 to 25 wt.%, based on the total weight of the hydrocracking catalyst. In especially preferred embodiments, the hydrocracking catalyst further comprises a second active species, preferably in an amount from 0.1 to 10 wt.%, based on the total weight of the hydrocracking catalyst. In that case, the active species supported on the carrier are preferably combinations selected from Fe/Mo, Fe/W, Ni/Mo, Ni/W, Cr/Mo, Ni/V, Ni/Co and Cr/W.

In order to modify the catalytic properties of the hydrocracking catalyst, the hydrocracking catalyst may further comprise dopant materials. The dopant materials are preferably selected from the group consisting of ammonium salts, preferably selected from $NH_4X$ (X=F, Cl, Br), NH4HF2, (NH4)2SiF6, $(NH_4)_2SbF_6$, $(NH_4)_2TiF_6$, (NH4)PF6, $(NH_4)_2SiF_6$, $(NH_4)_2ZrF_6$, NH4BF4, NH4F, (NH4)2TaF7, NH4NbF4, $(NH_4)_2GeF_6$, $(NH_4)_2SmF_6$, $(NH_4)_2TiF_6$, $(NH_4)_2ZrF_6$, and fluorides, preferably selected from $MoF_6$, $ReF_6$, $GaF_3$, $SO_2ClF$, $F_2$, $SiF_4$, $SF_6$, $ClF_3$, $ClF_5$, BrFs, $IF_7$, $NF_3$, HF, $BF_3$, $NHF_2$, and nitrogen.

It was surprisingly found that the yield of the hydrodepolymerization process as well as the liquid content of the product can be further improved by further employment of a depolymerization catalyst which is used in combination with the hydrocracking catalyst. In preferred embodiments, the depolymerization catalyst is an acidic compound which is selected from the group consisting of $Al_2O_3$, aluminosilicates, silica and zeolites. In particularly preferred embodiments, the zeolite employed as depolymerization catalyst is selected from the group consisting of Zeolite Y, Zeolite Beta, Zeolite A, Zeolite X, Zeolite L and mixtures thereof, especially Zeolite Y and Zeolite Beta. The listed zeolites are well-known and commercially available. Particularly preferred are zeolites wherein the metal ion M is substituted by a hydrogen. Other specific examples for suitable zeolite-type catalysts to be employed in the present disclosure include but are not limited to ZSM-5, ZSM-11, ZSM-22, ZSM-23, ZSM-35, ZSM-48, ZSM-50, TS-1, TS-2, SSZ-46, MCM-22, MCM-49, FU-9, PSH-3, ITQ-1, EU-1, NU-10, silicalite-1, silicalite-2, boralite-C, boralite-D, BCA, and mixtures thereof. Alternatively, or additionally, the depolymerization catalyst may comprise an amorphous-type compound which may comprise for example silica, alumina, kaolin, or any mixture thereof. Silica, in particular, in the form of sand, is well known for FCC catalyst applications.

The weight ratio of hydrocracking catalyst to depolymerization catalyst may vary depending on the composition of the organic waste material and may be adjusted to achieve optimal target product composition. In preferred embodiments, the weight ratio of hydrocracking catalyst to depolymerization catalyst is from 100:1 to 1:10, preferably from 10:1 to 1:5, more preferably from 5:1 to 1:3, and especially from 1:1 to 3:1.

The hydrocracking catalyst employed in the process of the present disclosure allows hydrodepolymerization of organic waste materials with high yields, in particular with a low content of aromatic and olefinic compounds in the hydrodepolymerization product. Apart from its surprising catalytic activity, the hydrocracking catalyst is also easily accessible, using common materials and reactions.

Therefore, in further preferred embodiments, the hydrocracking catalyst is obtained by a process comprising the following steps of:

a) providing a precursor compound for at least one of Fe, Mo, W, Ti, Ni, Cr, V, Co, Zr and mixtures thereof, the precursor compound being in the form of the respective salt;

b) dissolving the precursor compound in a polar solvent, for example a protic solvent such an alcohol or, most preferably, water;

c) providing a carrier selected from the group consisting of $SiO_2$, $Al_2O_3$, $AlPO_4$ and Al/Si mixed oxide;

d) depositing the dissolved precursor compound on the carrier by incipient wetness impregnation to obtain a hydrocracking catalyst precursor;

e) drying the hydrocracking catalyst precursor obtained in step d);

f) treating the dried hydrocracking catalyst precursor at elevated temperatures; and

g) cooling the product of step f) to obtain the hydrocracking catalyst.

The process of the production for the hydrocracking catalyst employs common compounds and can therefore easily be conducted. In preferred embodiments, the precursor compound is selected from the group consisting of inorganic or organic metal salts consisting of but not limited to oxides, hydroxides, carbonates, nitrates, nitrites, chlorides, bromides,

iodides, sulphites, sulphates, acetylacetonates, citrates, formats, acetates tetrafluoroborates, hexafluorosilicates, hexafluoroaluminates, hexafluorophosphates, phosphates, phosphites, oxalates, gluconates, malonates and mixtures thereof. Salts of the corresponding heteropoly acids of W, Mo and V like metatungstates, metamolybdates, metavanadates as non-limiting examples may also be used as the metal precursor compound.

The dried hydrocracking catalyst precursor obtained in step e) of the process of the present disclosure is preferably calcinated. Therefore, the process preferably comprises a further step of calcinating the dried hydrocracking catalyst precursor at elevated temperatures, preferably in a gas flow, the gas being preferably selected from the group consisting of air, oxygen, nitrogen and argon or a sequence of different gas atmospheres of those gases.

The process for the production of the hydrocracking catalyst may be carried out under moderate conditions. In preferred embodiments, the treatment of step f) of the process according to the disclosure is carried out at a temperature from 200 to 850°C, preferably from 230 to 550°C, more preferably from 400 to 700°C, and in particular from 250 to 600°C. Preferably nitrogen, oxygen, argon or air are used as purging gas during calcination/activation and most preferably in a sequence of (i) heating up under nitrogen or argon; (ii) calcination in air or oxygen; (iii) cooling down under nitrogen or argon. In preferred embodiments, reducing gases such as hydrogen, carbon monoxide, $H_2S$ and ethylene are employed during step f) of the process of the present disclosure. It was surprisingly found that said gases can be used to enhance the activity, selectivity and robustness of the hydrocracking catalyst of the present disclosure. Preferably, step f) of the process of the present disclosure is carried out in an oven, furnace, rotary kiln or fluidized-bed activator.

In further preferred embodiments, the process for the production of the hydrocracking catalyst further comprises a step of mixing the hydrocracking catalyst with a depolymerization catalyst, preferably an acidic compound as described above, in particular selected from the group consisting of $Al_2O_3$, aluminosilicates, silica and zeolites, especially from the group consisting of Zeolite Y, Zeolite Beta, Zeolite A, Zeolite X, Zeolite L and mixtures thereof, especially Zeolite Y and Zeolite Beta.

The hydrocracking catalyst and the organic waste material feedstock are mixed in step ii) of the process of the present disclosure. Mixing may be carried out prior to introduction into a reactor or the hydrocracking catalyst and the organic waste material may be fed separately into the reactor. The weight ratio of hydrocracking catalyst to organic waste material may vary and may dependent upon the particular system and process conditions used. Generally, organic waste material feedstocks can be converted employing a very low or very high hydrocracking catalyst-to-feed (C/F) ratio. Longer contact times may be needed in the case of a low C/F ratio, while shorter contact times may be needed for a high C/F ratio. Within the course of the present disclosure, C/F ratios of from 4 to 12 were found to be in particular suitable, especially C/F ratios of from 6 to 9. In preferred embodiments, the hydrocracking catalyst and the organic waste material feedstock are mixed homogenously in a liquid hydrocarbon prior to feeding the hydrocracking catalyst and the organic waste material feedstock into the hydrodepolymerization reactor.

In preferred embodiments of the present disclosure, the organic waste material is preheated to 200°C to 300°C, for example by an extruder, and is then mixed with the hydrocracking catalyst or a combination of the hydrocracking catalyst and a depolymerization catalyst in a hydrocarbon stream in a vessel prior to being feed into the reactor in which the hydrodepolymerization is conducted.

The hydrodepolymerization in step iii) of the process of the present disclosure can be carried out continuously or discontinuously. Preferably, step iii) is performed continuously. The hydrodepolymerization is preferably carried out in a hydrodepolymerization reactor system which is capable of handling pressures up to 500 bar and temperatures up to 600°C. Suitable high pressure reactor systems which cope with such conditions are, for example, reactor systems which are used in hydrocracking or hydrotreating processes in petroleum refining or which are used in coal liquification processes such as the Bergius process. Preferred high pressure reactor systems for carrying out step iii) comprise one or more connected vessels with or without an agitator.

In preferred embodiments, the hydrodepolymerization in step iii) is carried out at a temperature of from 200 to 600°C, preferably from 270 to 550°C, and especially from 300 to 450°C.

Preferably, the hydrodepolymerization of the mixture of organic waste material and hydrocracking catalyst or of organic waste material, hydrocracking catalyst and depolymerization catalyst is conducted at a hydrogen pressure from 20 to 500 bar (2 MPa to 50 MPa), preferably from 30 to 400 bar (3 to 40 MPa), and in particular from 100 to 350 bar (10 to 35 MPa) or, if conducted discontinuously, at an initial hydrogen pressure from 20 to 500 bar (2 to 50 MPa), preferably from 30 to 400 bar (3 to 40 MPa), and in particular from 100 to 350 bar (10 to 35 MPa). In other preferred embodiments, the hydrodepolymerization is carried out at a hydrogen pressure from 20 to 90 bar (2 MPa to 9 MPa).

In preferred embodiments of the present disclosure, the hydrodepolymerization is carried out continuously and the reactor content is continuously discharged from the reactor. The residence time is preferably set so to ensure a high conversion of the organic waste material. It is possible to continuously discharge one stream of reactor content from the reactor. Preferably, both a liquid-phase stream and a gas-phase stream are continuously discharged from the reactor. In such situations, a first sub-step of separation step iv) of the process of the present disclosure already occurs in the reactor. Preferably, all streams discharged from the reactor are subjected to further sub-steps of separation step iv).

The separation is preferably at least partly carried in a separation unit comprising a separator vessel and a

fractionation unit in which a liquid hydrodepolymerization product is collected. The separation unit may further comprise a cyclone separating a gaseous hydrodepolymerization crude product from other components.

Various separation techniques may be employed for separating the reactor content, i.e. the reaction product obtained in step iii) of the process of the present disclosure into a liquid or liquefiable hydrodepolymerization product and various other fraction. Suitable separation techniques include condensation, distillation and filtration. Preferably, the liquid or liquefiable hydrodepolymerization product is obtained after separating off high boiling hydrocarbons, char, catalyst residues and other solids contaminants by techniques such as distillation, decantation or filtration.

In preferred embodiments of the present disclosure, hydrocracking catalyst and/or hydrogen enriched gas fractions obtained in separation step iv) are re-introduced into the reactor.

Preferably, a liquid hydrocarbon stream separated off from the discharged reactor content which may still comprise solid residues and catalyst is used to be mixed with the organic waste material and the hydrocracking catalyst or the combination of organic waste material, hydrocracking catalyst and depolymerization catalyst prior to be fed into the hydrodepolymerization reactor. Preferably, the liquid hydrocarbon stream comprises solid residues and catalyst in a concentration of at the most 20 wt.%.

Energy efficient recycling of organic waste material preferably includes utilization of all recovered materials. Therefore, the process of the present disclosure preferably comprises a step of collecting gaseous fractions obtained in separation step iv). In preferred embodiments, gaseous fractions separated from the reactor content are condensed and so separated from undesired side products, such as CO, $CO_2$, $NH_3$, $H_2S$ and water. In this way, gaseous fractions formed in the hydrodepolymerization of step iii) of the present disclosure may be employed in other processes, e.g. in the production of diene products comprising hydrogen and $C_1$-$C_4$ hydrocarbon fractions.

Hydrodepolymerization Product

The combination of the hydrocracking catalyst of the present disclosure and the process of the present disclosure yields a liquid or liquefiable hydrodepolymerization product with a surprisingly low content of aromatic compounds and in particular a surprisingly low content of polycyclic aromatic compounds and asphaltanes. The hydrodepolymerization product obtained by the process of the present disclosure is accordingly characterized by a low content of aromatic and olefinic components as well as a high degree of purity.

The liquid or liquefiable hydrodepolymerization product obtained in the process of the present disclosure has preferably a boiling range from 30 to 650°C, more preferably from 50 to 250°C. By separation techniques such as distillation, the hydrodepolymerization product may be separated in hydrocarbon fractionations of different boiling ranges, for example a light naphtha fraction mainly containing $C_5$ and $C_6$ hydrocarbons having a boiling range from 30°C and 130°C, a heavy naphtha fraction mainly containing $C_6$ to $C_{12}$ hydrocarbons having a boiling range from 130°C to 220 °C, a kerosene fraction mainly containing $C_9$ to $C_{17}$ hydrocarbons having a boiling range from 220°C to 270 °C or into other high boiling point fractions such as diesel fuel, fuel oil or hydrowax. In preferred embodiments, heavy fractions of hydrodepolymerization products obtained in a process according to the present disclosure are sent back to an additional hydrodepolymerization step to produce light hydrocarbon fractions like light distillate feedstock for steam crackers. By choosing the appropriate reactor conditions and catalysts, the composition of the hydrodepolymerization product can be varied as required. Since producing a light distillate cracker feedstock in the hydrodepolymerization process of the present disclosure product requires a higher amount of hydrogen and a longer residence time in the reactor, it is also preferred to use hydrowax fractions having a boiling range from 300°C to 550°C as cracker feedstock. Since a reliable and economic operation of a steam cracker needs high purity feedstock with low amount of impurities, in preferred embodiments, the hydrodepolymerization product or fractions of the hydrodepolymerization product are blended with other feedstock prior to be used as cracker feed or as fuel.

In preferred embodiments, the hydrodepolymerization product therefore has a content of residues upon evaporation, determined according to ASTM D381, of no more than 5 ppm (w).

The hydrodepolymerization product obtained by the process of the present disclosure is characterized by its low content of aromatic and olefinic components as well as a high degree of purity. In preferred embodiments, the hydrodepolymerization product has a content of residues upon evaporation, determined according to ASTM D381, of no more than 5 ppm (w).

Preferably, the content of aromatic compounds in the obtained hydrodepolymerization product is less than 10 mol%, preferably less than 5 mol%, and in particular no more than 3 mol%, the content of aromatic components being measured as contents of aromatic protons in mol% as determined by $^1$H-NMR -spectroscopy

Further, the hydrodepolymerization product obtained by the hydrodepolymerization process of the present disclosure is characterized by a low content of olefinic compounds. The content of olefinic compounds in the hydrodepolymerization product is preferably less than 5 mol%, more preferably less than 3 mol%, even more preferably less than 1.5 mol%, and in particular no more than 1 mol%, based on the total number of hydrocarbon protons, the content of olefinic compounds determined based on the contents of olefinic protons as determined by $^1$H-NMR -spectroscopy.

Another measure for the content of double bonds in a given sample is the Bromine number (BrNo.) which indicates the degree of unsaturation. In preferred embodiments, the hydrodepolymerization product obtained by the process of the present disclosure has a Bromine number, expressed as gram bromine per 100 grams of sample, of less than 25, preferably from 0.1 to 20, more preferably from 0.2 to 15, even more preferably from 0.3 to 10 and in particular from 0.5 to 5, determined according to ASTM D1159-01.

The generation of char is often a problem in conventional processes, making regular decoking of the reactor and other equipment such as heat coils necessary. The process of the present disclosure surprisingly generates little to no char. Therefore, in preferred embodiments, the hydrodepolymerization product obtained by the process of the present disclosure has a char content of less than 5 wt.%, preferably less than 2 wt.%, based on the total weight of the product.

In preferred embodiments of the present disclosure, the hydrodepolymerization product obtained by the hydrodepolymerization process of the present disclosure is defined by upper limits of minor components, constituents or impurity expressed as percent by weight. The lower limits for the amounts of these components, constituents or impurity in the preferred hydrodepolymerization products are preferably below the detection limit or 0.001 wt.% or 0.01 wt.% or 0.1 wt.%, respectively.

The hydrodepolymerization product obtained by the process of the present disclosure is characterized by a low content of aromatic and olefinic compounds. Therefore, the obtained hydrodepolymerization product can be directly fed into a steam cracker for further processing without the need for further purification or pre-treatment, making the process of the present disclosure highly time and energy efficient. Thus, in a further aspect, the present disclosure provides the use of the hydrodepolymerization product of the process for hydrodepolymerization of the present disclosure as feedstock in a steam cracker. Preferably, the hydrodepolymerization product is used as feedstock for the production of olefins.

In another aspect, the present disclosure refers to the use of a hydrocracking catalyst comprising at least one of Fe, Mo, W, Ti, Ni, Cr, V, Co, Zr and mixtures thereof supported on a carrier selected from the group consisting of $SiO_2$, $Al_2O_3$, $AlPO_4$ and Al/Si mixed oxide for hydrodepolymerization of an organic waste material. The carrier is especially an Al/Si mixed oxide preferably containing $Al_2O_3$ in an amount from 20 to 99 wt.%, preferably from 30 to 80 wt.%, and especially from 40 to 70 wt.%, based on the total weight of the carrier. Further, the carrier preferably contains $SiO_2$ in an amount from 1 to 80 wt.%, preferably from 20 to 70 wt.%, and especially from 30 to 60 wt.%, based on the total weight of the carrier.

Further preferred are embodiments in which the weight ratio of $Al_2O_3$ to $SiO_2$ in the mixed oxide is from 99:1 to 30:70, preferably from 9:1 to 3:2, and in particular from 4:1 to 3:2.

The determination of the $SiO_2$ and $Al_2O_3$ content of the mixed oxide can be carried out by atomic emission spectroscopy using an inductively coupled plasma (ICP-AES).

The active species comprised in the hydrocracking catalyst are preferably selected from Cr, Ni and Mo. In especially preferred embodiments, the hydrocracking catalyst of the present disclosure is a mixed Al/Si oxide, the weight ratio of $Al_2O_3$ to $SiO_2$ being from 4:1 to 3:2 and the active species supported on the mixed Al/Si oxide being selected from the group consisting of Cr, Ni and Mo.

The hydrodepolymerization product obtained by the process of the present disclosure can be used directly as feedstock in the production of new olefinic materials, e.g., ethylene, propylene and/or butylene. The present disclosure thus further refers to a process for the production of olefins, the process comprising

i) providing a feedstock of organic waste material;

ii) mixing the feedstock of organic waste material with a hydrocracking catalyst comprising at least one of Fe, Mo, W, Ti, Ni, Cr, V, Co, Zr and mixtures thereof supported a carrier selected from the group consisting of $SiO_2$, $Al_2O_3$, $AlPO_4$ and Al/Si mixed oxide, the hydrocracking catalyst being optionally present in combination with a depolymerization catalyst;

iii) introducing the mixture of step ii) into a reactor and treating the mixture with hydrogen;

iv) separating the content of the reactor to obtain a liquid or liquefiable hydrodepolymerization product;

v) optionally, collecting gaseous fractions obtained in separation step iv); and

vi) introducing the obtained hydrodepolymerization product into a steam cracker to form a product comprising olefins.

The hydrocracking catalyst as well as the organic waste material feedstock and the conditions for carrying out the hydrodepolymerization are preferably the same as described above.

By producing olefins such as ethylene, propylene and/or butylene from polymeric waste materials comprising polyethylene, polypropylene and/or polybutylene and employing these olefins in the production of new polyethylenes, polypropylenes and/or polybutylene, a true circulation system for polyolefins with chemical recycling of the educts becomes possible without any reduction in the properties of the produced new polyolefins.

The present disclosure will be explained in more detail by the following examples which are by no means to be understood as limiting the spirit of the invention.

Analytical Methods

The following analytical methods were employed:

1) GC MS was used for liquid and gas analysis.

2) Char residue was determined according to mass balance after decoking the residues of the reactor at 800°C.

3) Liquid contents were characterized using simulated distillation (SimDist) analysis according to ASTM D 7213: 2012.

4) The total content of unsaturated components in the liquid condensates were characterized via Bromine number determination using a 848 Titrino Plus (Metrohm AG, Herisau, Switzerland) equipped with an double PT-wire electrode which has integrated a PT1000 temperature sensor, and a 10 ml buret in accordance with ASTM D1159-01 as described in Metrohm Application Bulletin 177/5e, December 2018. The Bromine number (BrNo.) represents the amount of bromine in grams absorbed by 100 grams of a sample.

5) $^1$H-NMR analysis was conducted by dissolving a sample of the liquid condensate in $CDCl_3$ and characterizing the sample using proton NMR spectroscopy. Aromatic, olefinic and aliphatic protons were assigned according to the chemical shifts summarized in Table 1:

Table 1 - Integral Regions in $^1$H-NMR spectroscopy

| Peak Assignment | 1H Chemical Shift (ppm) |
|---|---|
| I1 (Aromatic Protons) | 8.25 - 7.27 |
| CDCl3 -Solvent | 7.26 |
| I2 (Aromatic Protons) | 7.25 - 6.60 |
| I3 (Olefinic Protons - Type 2) | 6.60 - 5.95 |
| I4 (Olefinic Protons - Type 1) | 5.95-5.67 |
| I5 (Olefinic Protons - Type 2 ) | 5.67 - 5.35 |
| I6 (Olefinic Protons - Type 3) | 5.35 - 5.15 |
| I7 (Olefinic Protons - Type 1) | 5.15-4.85 |
| I8 (Olefinic Protons - Type 4) | 4.85 - 4.40 |
| I9...(Paraffinic Protons) | 4.40 - 0.25 |

The listed types of olefinic protons are assumed to correspond to the following structures:

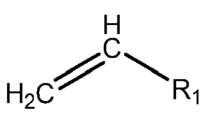
Type 1

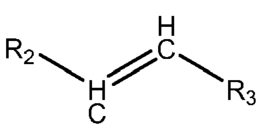
Type 2

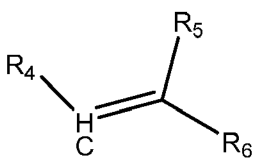
Type 3

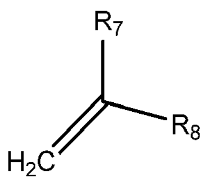
Type 4

The amounts of aromatic, olefinic and aliphatic protons may be determined based on the assigned peak integrals according to the following equations:

$$\text{Mol\% Aromatic Protons} = [\,(I_1 + I_2) / (I_1 + I_2 + I_3 + I_4 + I_5 + I_6 + I_7 + I_8 + I_9)\,]\ \%$$

$$\text{Mol\% Olefinic Protons Type 1} = [ (I_4 + I_7) / (I_1 + I_2 + I_3 + I_4 + I_5 + I_6 + I_7 + I_8 + I_9) ] \%$$

$$\text{Mol \% Olefinic Protons Type 2} = [ (I_3 + I_5) / (I_1 + I_2 + I_3 + I_4 + I_5 + I_6 + I_7 + I_8 + I_9) ] \%$$

$$\text{Mol \% Olefinic Protons Type 3} = [ (I_6) / (I_1 + I_2 + I_3 + I_4 + I_5 + I_6 + I_7 + I_8 + I_9) ] \%$$

$$\text{Mol \% Olefinic Protons Type 4} = [ (I_8) / (I_1 + I_2 + I_3 + I_4 + I_5 + I_6 + I_7 + I_8 + I_9) ] \%$$

$$\text{Mol\% Paraffinic Protons} = [ (I_9) / (I_1 + I_2 + I_3 + I_4 + I_5 + I_6 + I_7 + I_8 + I_9) ] \%$$

6) The water content of the carrier, the hydrocracking catalyst and the depolymerization catalyst was determined using a Sartorius MA45 (Sartorius AG, Goettingen, Germany) on a sample of 0.5 to 1 g at 180°C.
7) For the determination of a pH value of the hydrodepolymerization products, by extraction of a liquid sample of the hydrodepolymerization product was extracted with water in a volume ratio water:sample of 1:5 and the pH value of the aqueous solution was measured.
8) Properties of the employed organic waste material feedstock were determined as follows:
As the composition of the organic waste material may vary, samples from 20 to 100 g of the polymeric waste were milled and analyzed. Alternatively, a pelletized sample of the polymeric waste was analyzed. The following methods are used:

i) Total Volatiles (TV) were measured as the weight loss of a 10 g sample at 100°C and after 2 hours at 200 mbar.
ii) Water content was determined by Karl-Fischer titration using an apparatus from Metrohm 915 KF Ti-Touch equipped with a PT100 indicator electrode for volumetric KF titration according to Metrohm Application Bulletin 77/3e in compliance with ASTM E203.
iii) IR-Spectroscopy was used for a qualitative identification of various polymers (PP, PE, PS, PA, PET, PU, Polyester) and additives such as CaCO3
iv) Standard elemental analysis was used for determination of wt.% of H, C, N (DIN 51732: 2014-07) and S (tube furnace, ELTRA GmbH, Haan, Germany, DIN 51724-3: 2012-07).
v) $^1$H-NMR was used for determining the composition of polymers soluble in solvents adequate for recording a $^1$H-NMR spectrum: PE/PP balance (copolymers are also included), PET, PS
vi) Ash Content analysis of plastics was determined at 800°C according to DIN EN ISO 3451-1 (2019-05).
vii) Bulk density of the polymer waste was determined according to DIN 53466.
viii) Corrosivity was determined as the pH value of an aqueous solution after a contact time of 3 h (5 g sample in 50 ml distilled water)
ix) Inductively coupled plasma atomic emission spectroscopy (ICP-AES) was used for quantitative element determination (total chlorine content, content of Si or metals)
x) The ash content of a liquid feedstock such as pyrolysis oil, ethylene cracker residue (ECR), vacuum gas oil (VGO), heavy vacuum gas oil (HVGO) is measured according to ASTM D482-19.

Feedstocks:

The following organic waste materials were employed as feedstocks:

A: Pelletized agricultural and industrial packaging film
B: Shredded flakes and small pieces of film
C: Flakes, fluff and small pieces of film
D: Shredded film
E: Shredded and pelletized multilayer film
F: Ethylene Cracker Residue (ECR), also known as pitch or cracker oil, is a highly viscous brown-black liquid with a distinctive smell, which is produced during the manufacture of ethylene in a steam cracking process. ECR is mainly used as fuel, particularly for power plants. The sample used contained 33% of asphaltenes measured as heptane insoluble according to IP143 and 44 mol% of aromatic protons by $^1$H-NMR, the central boiling point (65%) was 486°C by ASTM D1160, the ash content <0,01 wt.% and the density 1139 kg/m$^3$ at 15°C (DIN12791).

The properties of the feedstocks are summarized in Table 2.

Table 2

| Feedstock | Ash wt% | TV wt% | BD g/cm3 | Cl wt% | PE+PP wt% | PE wt% | PP wt% | PET wt% | PS wt% | PA wt% | Other cont. wt% |
|---|---|---|---|---|---|---|---|---|---|---|---|
| A | 1.5 | 0.1 | 494 | 0.01 | 95 | 83 | 12 | <0.1 | 0.7 | 0.5 | 3.8 |
| B | 1.6 | 1.8 | 180 | 0.06 | 97 | 41 | 56 | <0.1 | 0.8 | 0.5 | 1.7 |
| C | 3.8 | 1.8 | 250 | 0.06 | 93 | 52 | 41 | 0.2 | 1.8 | 2.2 | 2.8 |
| D | 0.5 | 3.5 | 65 | 0.09 | 95 | 52 | 43 | <0.1 | 1 | - | 4 |
| E | 0.4 | 0.2 | 530 | <0.01 | 50 | 20 | 30 | 12 | 0 | 10 | 0 |

Ash: ash content
TV: total volatiles
BD: bulk density
Cl: total chlorine content
PE: polyethylene content
PP: polypropylene content
PET: content of polyethylene terephthalate
PS: polystyrene content
PA: polyamide content
Other cont.: content of other contaminants

Depolymerization Catalysts

Catalyst #1a: Al/Si mixed oxide with an average particle size of 30 μm, having a ratio of $Al_2O_3$ to $SiO_2$ of 60:40, commercially available under the name of Siral 40 HPV from Sasol Germany GmbH, Hamburg, Germany.

Catalyst #1b: Zeolite Beta, commercially available as Zeolyst Beta (CP811 E-75) from PQ Corporation, Malvern, PA,USA.

Hydrocracking Catalysts

Catalyst #2: 5%, based on the amount of catalyst #1a, of Ni as $Ni(NO_3)_2$ solution in water was deposited on Catalyst #1a as catalyst support by incipient wetness method and dried to a free flowing powder. The catalyst precursor was introduced into a fluidized bed activator and the temperature was increased to 300°C while purging with nitrogen. At 300°C, the purge gas was changed to air, the temperature increased to 500°C and maintained for 2 h before cooling to 300°C and switching the gas from air to nitrogen before cooling to room temperature.

Catalyst #3: 5%, based on the amount of catalyst #1a, of Cr as $Cr(NO_3)_2$ solution in methanol was deposited on Catalyst #1a as catalyst support by incipient wetness method and dried to a free flowing powder. The catalyst precursor was introduced into a fluidized bed activator and the temperature was increased to 300°C while purging with nitrogen. At 300°C the purge gas was changed to air, the temperature increased to 500°C and maintained for 2 h before cooling to 300°C and switching the gas from air to nitrogen before cooling to room temperature.

Catalyst #4: physical mixture of 3g of Catalyst #2 and 3g of a Zeolite Beta (Catalyst #1b)

Catalyst #5: physical mixture of 3g of Catalyst #2 and 1g of a Zeolite Beta (Catalyst #1b)

Hydrodepolymerization

In Runs #1 to #10, 57 g of Feedstock A and 3 g of catalyst were suspended in 60 g of hydrated white oil (Ondina 4, Royal Dutch Shell Company) in a 500 ml autoclave under nitrogen atmosphere. The reactor was purged with hydrogen and pressurized with hydrogen at room temperature until the desired initial hydrogen pressure was reached. The mixture was then heated up to 150°C and stirred for 30 min (mixing step) before the reactor temperature was increased to the final reaction temperature over the course of 1 h with constant stirring at 200 rpm. After maintaining the reaction temperature in the reactor for 1 h, the reactor was cooled down to 60°C and depressurized. The product was collected by filtering of the reactor content..

Run #11 is a repetition of Run #7 however, Feedstock A and Catalyst #4 were suspended in 60 g of the pyrolysis oil obtained by thermal depolymerization in Comparative Run #C instead of in hydrated white oil.

Details of the hydrodepolymerization such as catalyst, initial hydrogen pressure and final reaction temperature as well as the results of the hydrodepolymerization are summarized in Table 3. Analytical data of the obtained hydrodepolymerization products are summarized in Tables 4 and 5.

Table 3: Examples according to the present disclosure.

| Run# | Cat. # | $P(H_2)$ [bar] (initial) | Temp. [°C] | Yield Oil/Wax [%] | Appearance | Gas [wt. %] |
|---|---|---|---|---|---|---|
| A* | 1a | 51 | 500 | 75 | Turbid highly viscous black liquid with wax particles | 25 |
| B* | 1b | 50 | 500 | 73 | Turbid viscous black liquid | 27 |
| 1 | 2 | 50 | 400 | 96 | White wax | 4 |
| 2 | 2 | 50 | 500 | 79 | Low viscous orange liquid | 21 |
| 3 | 2 | 50 | 550 | 71 | Low viscous red liquid | 29 |
| 4 | 2 | 125 | 500 | 77 | Low viscous pale yellow liquid | 23 |
| 5 | 3 | 51 | 450 | 94 | yellow wax | 6 |
| 6 | 4 | 125 | 400 | 60 | Low viscous orange liquid | 40 |
| 7 | 4 | 125 | 350 | 73 | Low viscous yellow liquid | 27 |
| 8 | 4 | 125 | 300 | 96 | black wax (containing cat., no filtration) | 4 |
| 9 | 5 | 125 | 350 | 94 | Low viscous colorless liquid | 6 |
| 10 | 5 | 125 | 450 | 73 | Low viscous colorless liquid | 27 |
| C* | - | - | 500 | 79 | Turbid viscous black liquid | 16 |
| 11 | 4 | 125 | 350 | 96 | Low viscous orange liquid | 4 |
| *) comparative | | | | | | |

Table 4

| Run# | pH-value | BrNo. | Mol% Olefin from BrNo. | Mol. mass Engler Diagram [g/mol] | IBP from SIM-DEST [°C] | Boiling temp. 50% from SIM-DEST [°C] | FBP from SIM-DEST [°C] |
|---|---|---|---|---|---|---|---|
| A* | | 24 | - | - | 35.0 | 198.6 | 549.2 |
| B* | | 25 | - | - | - | - | - |
| 1 | | 3 | 3.0 | 240 | 34.8 | 360.1 | 728.4 |
| 2 | | 12 | 10.2 | 165 | 36.7 | 234.1 | 561.0 |
| 3 | | 17 | 14.4 | 145 | 34.2 | 196.3 | 532.0 |
| 4 | | 4 | 3.0 | 120 | 23.1 | 162.3 | 522.0 |
| 5 | | 5 | 11.8 | 370 | 144.3 | 474.9 | 680.7 |
| 6 | | 5 | 3.8 | 125 | 22.2 | 162.0 | 583.1 |
| 7 | | 8 | - | - | - | - | - |
| 8 | | 4 | - | - | - | - | - |
| 9 | | 10 | - | - | - | - | - |
| 10 | | 2 | 1.5 | 120 | 30.4 | 156.8 | 476.6 |
| C* | 4.0 | 74 | - | - | 76.0 | 297.7 | 614.7 |

(continued)

| Run# | pH-value | BrNo. | Mol% Olefin from BrNo. | Mol. mass Engler Diagram [g/mol] | IBP from SIM-DEST [°C] | Boiling temp. 50% from SIM-DEST [°C] | FBP from SIM-DEST [°C] |
|---|---|---|---|---|---|---|---|
| 11 | 6.5 | 14 | - | - | 36.3 | 135.6 | 476.3 |
| *) comparative | | | | | | | |

Table 5: $^1$H-NMR: mol % protons of specific type

| Run# | Aromatic | Olefin ALL | Olefin Type 1 | Olefin Type 2 | Olefin Type 3 | Olefin Type 4 | Aliphatic |
|---|---|---|---|---|---|---|---|
| A* | 5.74 | 1.29 | 0.17 | 0.89 | 0.23 | 0.00 | 93.370 |
| B* | 7.602 | 0.889 | 0.210 | 0.296 | 0.257 | 0.125 | 91.511 |
| 1 | 0.663 | 0.224 | 0.079 | 0.068 | 0.066 | 0.012 | 99.113 |
| 2 | 2.043 | 0.625 | 0.191 | 0.186 | 0.182 | 0.067 | 97.332 |
| 3 | 3.382 | 0.845 | 0.224 | 0.301 | 0.242 | 0.078 | 95.324 |
| 4 | 1.637 | 0.220 | 0.074 | 0.053 | 0.063 | 0.030 | 98.145 |
| 5 | 0.49 | 0.23 | 0.00 | 0.00 | 0.23 | 0.00 | 99.280 |
| 6 | 4.232 | 0.022 | 0.057 | 0.067 | 0.067 | 0.030 | 95.561 |
| 7 | 1.786 | 0.323 | 0.096 | 0.094 | 0.107 | 0.026 | 97.901 |
| 8 | - | - | - | - | - | - | - |
| 9 | 0.575 | 0.405 | 0.114 | 0.119 | 0.127 | 0.046 | 99.031 |
| 10 | 2.225 | 0.091 | 0.024 | 0.038 | 0.027 | 0.003 | 97.689 |
| C* | 3.440 | 8.702 | 1.664 | 4.428 | 1.650 | 0.960 | 90.132 |
| 11 | 1.084 | 0.660 | 0.214 | 0.145 | 0.166 | 0.135 | 98.259 |
| *) comparative | | | | | | | |

The data generated in Run A with Catalyst #1a show that even in the presence of hydrogen, pyrolysis of plastic waste leads to a high olefinic waxy product with a high char content, as derivable from its black color, and 5.7 mol-% of aromatic hydrogens/protons as determined by $^1$H-NMR.

Although Catalyst #1 b is known as being a highly effective depolymerization catalyst, pyrolysis of plastic waste in the presence of hydrogen leads to a high olefinic waxy product with a high char content, as derivable from its black color, and 7.6 mol-% of aromatic hydrogens/protons, determined by $^1$H-NMR.

In contrast thereto, Runs carried out in the presence of the hydrocracking catalyst of the present disclosure demonstrate the very versatile capability of the catalyst to achieve very high yields of liquid product and clean, highly aliphatic products. Remarkably, no obvious char deposition in the product or on the reactor wall was observed. In addition, the pH of the obtained liquids was found to have increased from 4 for the comparative Runs to 6 for the Runs in accordance with the present disclosure, indicating that the process of the present disclosure includes both hydrotreating and hydrocracking reactions besides depolymerization.

In particular Runs #6 to #10 demonstrates that the catalytic activity of the catalyst in the process of the present disclosure can be further improved by addition of a depolymerization catalyst which is an acidic compound. By adjusting the ratio of hydrocracking catalyst to depolymerization catalyst, the composition of the product as well as the liquid yield can be optimized in a versatile way to shift the depolymerization reaction towards the desired product. The performance of the combination of a hydrocracking catalyst and an acidic depolymerization catalyst has proven to be an excellent approach to convert organic waste material to useable feedstock with low olefinic content, suitable for steam crackers. The hydrodepolymerization reaction was surprisingly found to be highly selective and almost no char or aromatic content was observed.

Run #11 demonstrates that even when using a pyrolysis oil obtained by thermal depolymerization of plastic waste which as such is not suitable to be used as feedstock for, e.g., a steam cracker for suspending the plastic waste,

the produced hydrodepolymerization product has an acceptable level of aromatic content which allows the hydrodepolymerization product to be used as feedstock.

Further, a test was conducted using feedstock F (Run 12) and a 1:1 mixture of ECR/PW (feedstocks F and A) (Run 13). The results are summarized in Tables 6 and 7.

Table 6.

| Run# | Cat. # | $P(H_2)$ [bar] (initial) | Temp. [°C] | Yield Oil/Wax [%] | Appearance | Gas [wt.%] | BrNo. |
|---|---|---|---|---|---|---|---|
| 12 | 2 | 125 | 350 | 99 | Low viscous red color liquid | 1 | 8.4 |
| 13 | 2 | 125 | 350 | 94 | Low viscous red color liquid | 6 | 4.8 |

Table 7: $^1$H-NMR: mol % protons of specific type

| Run# | Aromatic | Olefin ALL | Olefin Type 1 | Olefin Type 2 | Olefin Type 3 | Olefin Type 4 | Aliphatic |
|---|---|---|---|---|---|---|---|
| 12 | 9.927 | 0.061 | 0.022 | 0.012 | 0.015 | 0.013 | 90.019 |
| 13 | 8.852 | 0.051 | 0.019 | 0.010 | 0.011 | 0.011 | 91.103 |

The summarized data clearly show that even cracker residue as well as mixtures of cracker residue and plastic waste can be employed, demonstrating the wide applicability of the hydrocracking catalyst and process of the present disclosure.

The examples above clearly demonstrate that catalytic hydrodepolymerization of plastic waste is a capable technology for achieving a high conversion of plastic waste also in combination with heavy feedstocks from refineries or crackers as well as pyrolysis oil to suitable feedstock for crackers with minimizing by-products such as gas and coke. The hydrodepolymerization product meets perfectly the requirement of a cracker feedstock with low aromatic, low olefinic and low hetero atom content.

Depending on the feedstock, the operating conditions i.e. temperature, pressure, hydrocracking catalyst and depolymerization catalyst type and average particle size may be adjusted to achieve the best performance of the process. The mixing of the hydrocracking catalyst and polymeric waste as well as other feedstocks in a separate process step was found to be very helpful to achieve a uniform dispersion catalyst leading to high conversion and optimal catalyst activity.

## Claims

**1.** Process for the hydrodepolymerization of organic waste material, the process comprising the steps of

i) providing a feedstock of organic waste material;
ii) mixing the feedstock of organic waste material with a hydrocracking catalyst comprising a hydrogenating component which comprises at least one of Fe, Mo, W, Ti, Ni, Cr, V, Co, Zr and mixtures thereof supported on an inorganic carrier and comprising a depolymerization component which is an acidic compound, preferably selected from the group of $Al_2O_3$, aluminosilicates, silica and zeolites, in particular from the group of Zeolite Y, Zeolite Beta, Zeolite A, Zeolite X, Zeolite L and mixtures thereof, especially Zeolite Y and Zeolite Beta;
iii) depolymerizing the mixture in the presence of hydrogen in a reactor;
iv) separating the content of the reactor to obtain a liquid or liquefiable hydrodepolymerization product;
v) optionally, re-introducing hydrocracking catalyst and/or hydrogen enriched gas fractions obtained in separation step iv) into the reactor; and
vi) optionally, collecting gaseous fractions obtained in separation step iv).

**2.** The process of claim 1, wherein the inorganic carrier of the hydrogenating component is the depolymerization component.

**3.** The process of at least one of claims 1 or 2, wherein the hydrocracking catalyst is used in combination with a depolymerization catalyst and the depolymerization catalyst is an acidic compound, preferably selected from the group of $Al_2O_3$, aluminosilicates, silica and zeolites, in particular from the group of Zeolite Y, Zeolite Beta, Zeolite A, Zeolite X, Zeolite L and mixtures thereof, especially Zeolite Y and Zeolite Beta.

4. The process of any of the preceding claims, wherein the hydrodepolymerization is carried out at an initial hydrogen pressure from 20 to 500 bar, preferably from 30 to 400 bar, in particular from 100 to 350 bar and/or the hydrodepolymerization is carried out at a temperature from 200 to 600°C, preferably from 270 to 550°C, in particular from 300 to 450°C.

5. The process of any of the preceding claims, wherein the organic waste material is a polymeric waste material which consists of or comprises a plastic material selected from the group comprising or consisting of polyethylene (PE), polypropylene (PP), polystyrene (PS), polyethylene terephthalate (PET), polyvinylchloride (PVC), polyamide (PA), polyurethane (PU), polyacrylonitrile (PAN) and polybutylene (PB) and mixtures thereof.

6. The process of any of the preceding claims, wherein the organic waste material has a total content of volatiles and the total content of volatiles in the organic waste material measured as weight loss at 100°C and a pressure of 200 mbar over a period of 2 hours is less than 10 wt.%, preferably less than 5 wt.%, more preferably less than 2 wt.%, especially less than 1 wt.%, based on the total weight of the organic waste material.

7. The process of any of the preceding claims, wherein the organic waste material is a shredded polymeric waste material having a bulk density from 50 to 500 g/l, preferably from 75 to 400 g/l or the polymeric waste material is in pellet form and has a bulk density from 300 to 700 g/l, the bulk density being determined according to DIN 53466.

8. The process of any of the preceding claims, wherein the organic waste material has a polyolefin content, in particular a content of polypropylene (PP) and/or of polyethylene (PE), and the polyolefin content is more than 50 wt.%, preferably more than 60 wt.%, more preferably more than 70 wt.%, especially more than 80 wt.% and in particular more than 90 wt.%, based on the total weight of the organic waste material feedstock.

9. The process of any of the preceding claims, wherein the organic waste material has a total chlorine content and the total chlorine content of the organic waste material is less than 1.0 wt.%, preferably less than 0.5 wt.%, based on the total weight of the organic waste material.

10. The process of any of the preceding claims, wherein the obtained hydrodepolymerization product has a content of olefinic compounds, expressed as bromine number of less than 20, preferably less than 15, and in particular no more than 10, based on the total weight of the hydrodepolymerization product and/or the $^1$H-NMR spectrum of the obtained hydrodepolymerization product shows less than 10 mol%, preferably less than 5 mol%, and in particular no more than 3 mol% of aromatic protons.

11. The process of any of the preceding claims, **characterized in that** the hydrocracking catalyst is obtained by a process comprising the steps of

a) providing a precursor compound for at least one of Fe, Mo, W, Ti, Ni, Cr, V, Co, Zr and mixtures thereof, the precursor compound being in the form of the respective salt;
b) dissolving the precursor compound in a polar solvent;
c) providing an inorganic carrier;
d) depositing the dissolved precursor compound on the carrier by incipient wetness impregnation to obtain a hydrocracking catalyst precursor;
e) drying the hydrocracking catalyst precursor obtained in step d);
f) treating the dried hydrocracking catalyst precursor at elevated temperatures; and
g) cooling the product of step f) to obtain the hydrocracking catalyst.

12. The use of a hydrodepolymerization product obtained by the process of any of claims 1 to 11 as feedstock for a steam cracker.

13. The use of a hydrocracking catalyst comprising a hydrogenating component which comprises at least one of Fe, Mo, W, Ti, Ni, Cr, V, Co, Zr and mixtures thereof supported on an inorganic carrier and comprising a depolymerization component which is an acidic compound for hydrodepolymerization of organic waste material.

14. The use of claim 13, wherein the hydrocracking catalyst is used in combination with a depolymerization catalyst, wherein the depolymerization catalyst is an acidic compound, preferably selected from the group of $Al_2O_3$, aluminosilicates , silica and zeolites, in particular from the group of Zeolite Y, Zeolite Beta, Zeolite A, Zeolite X, Zeolite L and mixtures thereof, especially Zeolite Y and Zeolite Beta.

**15.** A process for the production of olefins, the process comprising

i) providing a feedstock of organic waste material;
ii) mixing the feedstock of organic waste material with a hydrocracking catalyst comprising a hydrogenating component which comprises at least one of Fe, Mo, W, Ti, Ni, Cr, V, Co, Zr and mixtures thereof supported on an inorganic carrier and comprising a depolymerization component which is an acidic compound;
iii) introducing the mixture into a reactor and treating the mixture with hydrogen;
iv) separating the content of the reactor to obtain a liquid or liquefiable hydrodepolymerization product;
v) optionally, collecting gaseous fractions obtained in separation step iv); and
vi) introducing the hydrodepolymerization product into a steam cracker to form a product comprising olefins.

Europäisches Patentamt
European Patent Office
Office européen des brevets

# EUROPEAN SEARCH REPORT

Application Number
EP 21 15 2705

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/299491 A1 (STANISLAUS ALEXANDER [IN] ET AL) 3 October 2019 (2019-10-03)<br>* paragraphs [0018], [0019], [0025], [0029] *<br>* claims 1-9 *<br>----- | 1-15 | INV.<br>C10G1/06<br>C10G1/08<br>C10G1/10 |
| X | CN 103 980 938 A (UNIV DALIAN TECH; HEBEI RONGDA CHEMICAL CO LTD)<br>13 August 2014 (2014-08-13)<br>* table 2 *<br>* Examples *<br>* claims 1-3 *<br>----- | 1-11,13,14 | |

TECHNICAL FIELDS SEARCHED (IPC)
C10G

The present search report has been drawn up for all claims

1

| Place of search | Date of completion of the search | Examiner |
|---|---|---|
| The Hague | 9 July 2021 | Pardo Torre, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 21 15 2705

This annex lists the patent family members relating to the patent documents cited in the above-mentioned European search report. The members are as contained in the European Patent Office EDP file on
The European Patent Office is in no way liable for these particulars which are merely given for the purpose of information.

09-07-2021

| Patent document cited in search report | Publication date | Patent family member(s) | Publication date |
|---|---|---|---|
| US 2019299491 A1 | 03-10-2019 | CN 109563413 A | 02-04-2019 |
| | | EP 3491103 A1 | 05-06-2019 |
| | | JP 2019527758 A | 03-10-2019 |
| | | US 2019299491 A1 | 03-10-2019 |
| | | WO 2018025104 A1 | 08-02-2018 |
| CN 103980938 A | 13-08-2014 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2012076890 A1
- WO 2010139997 A2
- US 20180201847 A1
- US 4941966 A
- US 6171475 B1
- WO 2013169462 A1
- WO 2018055555 A1
- US 20180002609 A1

### Non-patent literature cited in the description

- Efficiency and proportions of waste tyre pyrolysis products depending on the reactor type - A review. *Journal of Analytical and Applied Pyrolysis,* 2019, vol. 140, 25-53
- **B. RUJ et al.** Sorting of plastic waste for effective recycling. *Int. J. Appl. Sci. Eng. Res,* 2015, vol. 4, 564-571
- **S. BRUNAUER et al.** *Journal of the American Chemical Society,* 1929, vol. 60, 209-319